# EUROPEAN PATENT SPECIFICATION

(11) **EP 0 468 098 B1**
(45) Date of publication and mention of the grant of the patent: **02.08.1995**
(21) Application number: 90125350.0
(22) Date of filing: 22.12.1990
(51) Int. Cl.: G01L 9/06

(54) **Method of manufacturing pressure transducers**
Verfahren zur Herstellung eines Druckwandlers
Méthode de manufacture de transducteurs de pression

(30) Priority: 27.07.1990 US 558764
(43) Date of publication of application: 29.01.1992
(73) Proprietor: DATA INSTRUMENTS INC., Acton, MA 01720 (US)
(72) Inventor: Erichsen, Herman W., Holliston, MA 01746 (US); Panagotopulos, Louis J., Walpole, MA 02081 (US)
(74) Representative: Matschkur, Götz, Lindner Patent- und Rechtsanwälte

(56) References cited:
- DE-A- 2 711 749
- FR-A- 2 643 148
- GB-A- 1 478 315
- US-A- 4 368 575
- US-A- 4 554 927
- MACHINE DESIGN, vol. 59, no. 19, 20 August 1987, Cleveland, US, pages 85-88, R.A. MINARD: "Pressure transducers for hydraulic control"

## Description

This invention relates to the manufacture of pressure transducers and more particularly to a method of making a strain gage pressure transducer in accordance with the pre-characterizing portion of claim 1.

Strain gage transducers for measuring pressure or mechanical movements are well known, as exemplified by U.S. Patents Nos. 3611367, 4683755, 4793194, 4737473, 4576052, 4442717 and 4410871, and the references cited therein. See, for example, the various forms of strain gage transducers disclosed in "Transducers Pressure and Temperature, 1974", published by National Semiconductor Corporation of Santa Clara, California.

An improved pressure transducer made from sheet materials of predetermined thicknesses is described in U.S. Patent No. 4327350, issued April 27, 1982 to Herman W. Erichsen for "Pressure Transducer". A further improvement in the art of making pressure transducers from sheet materials is described in U.S. Patent No. 4368575, issued January 18, 1983 to Herman W. Erichsen et al for "Pressure Transducer - Method of Making Same". Both of those patents disclose transducers comprising a diaphragm and a deflection beam that supports at least two strain gages or sensors and is adapted to deflect responsively when the diaphragm is flexed by changes in pressure. The strain gages or sensors respond so as to indicate the amount of flexing of the diaphragm.

The invention described in U.S. Patent No. 4368575 has achieved commercial success. Nevertheless, it has been recognized that the manufacturing process described in U.S. Patent No. 4368575 has some limitations. For one thing, the sensors are in the form of small elongate slivers of silicon or germanium that are bonded to the beam. Typically each sliver comprises a strain gage formed by diffusion. Because of their relatively small size (typically 0.0002-0.005˝ thick, about 0.10 inches long and about 0.005˝ wide), the slivers are difficult to handle and also present difficulties in the making of appropriate electrical circuit connections. Thus, it was found to be impractical to apply gold terminal pads to the slivers, and, in lieu thereof, gold leads are attached directly to the slivers. As a practical matter, the attachment of gold wire leads may be accomplished best by thermo-compression welding. However, this method of attaching leads to the strain gage slivers is time consuming and expensive, in part because of the size of the slivers and the wire leads.

Another limitation of the invention described in U.S. Patent No. 4638575 concerns the non-uniformity of strain gage characteristics resulting from the use of several slivers of silicon or germanium to form the strain sensors.

Still another complication is the need to etch the silicon or germanium slivers to trim their electrical resistance. Such etching procedure typically involves etching one or more of the 0.002 - 0.005˝ thick silicon or germanium sliver to a thickness of about 0.0005˝. Obviously the etching operation is difficult to control and time-consuming.

Another even more troublesome limitation results from the need to bond the wire leads directly to the small slivers before they are attached to the beam. The wire leads tend to assume a random orientation. As a result, it is not practical to bond the leads to a circuit board by robotic means or other mechanical equipment. Therefore, prior to this invention the practice has been to manually bond the terminal leads to an associated cicuit board.

In GB-A-1 478 315, a pressure transducer is disclosed in which pairs of resistive strips are diffused into the surface of a silicon beam. The resistive strips are electrically seperated from the flexible silicon beam by diode junctions.

From DE-A-2 711 749 a transducer is known, comprising a diaphragm and a silicon support coupled to that diaphragm. The silicon support comprises a flexible portion with a strain gage unit diffused therein.

In the journal "Machine Design", volume 59, No. 19, August '87, Cleveland (U.S.), pp. 85-88: R.A. Minard: "Pressure Transducers for Hydraulic Control" the working principle of bounded semiconductor transducers is described. The flexible beam coupled to the diaphragm and the strain gages thereon are placed inside a tube proximate to a pressure port assembly. More details as to the kind of making and assembling the pressure transducer cannot be recognized.

The primary object of this invention is to improve upon the method of manufacturing pressure transducers described in U.S. Patents Nos. 4327350 and 4368575.

Another object is to provide a method of making pressure-sensing modules that constitutes an improvement over that disclosed in U.S. Patents Nos. 4327350 and 4368575.

A further object of this invention is to provide a method of making new pressure sensing modules and pressure transducers that offer all of the advantages of devices of the type described in U.S. Patents Nos. 4327350 and 4368575 while offering economies of manufacture.

Still another object of this invention is to provide a method of making strain gage pressure-sensing modules, and transducers embodying same, having better uniformity of strain gage characteristics.

A further object of the invention is to provide a method of making new beam-type strain gage pressure transducers adapted to respond to a predetermined range of fluid pressures.

Another more specific object is to provide a method of making new pressure-sensing modules and transducers, with consistently high quality at relatively low cost.

A further specific object is to provide a method of manufacturing pressure transducers that takes advantage of relatively low cost manufacturing operations.

Still another object is to provide a method of making pressure-sensing modules and transducers in which a single piece of silicon or germanium is used to provide both compression and tension strain gage sensors.

The foregoing objects and advantages are achieved by a new method which is defined in claim 1 and the dependant claims. According to a preferred embodiment, the claimed method utilizes strips of slivers of silicon or germanium which are larger than the individual strips used in the method described in U.S. Patent No. 4368575 by an amount sufficient to permit (a) the formation of two gages on each strip and (b) the forming of bonding pads on each gage.

The bonding pads are bonded to the gage strip before the strip is bonded to the beam, so that formation of the bonding pads can be handled automatically, preferably using a suitable technique well known in the silicon processing art, e.g., vapor deposition or sputtering.

Described generally, in its preferred embodiment the method comprises the steps of:
(a) securing certain mechanical parts together by brazing and also by mechanical deformation or a suitable cement to form a mechanical sub-assembly which includes the beam and diaphragm;
(b) mounting a multi-gage strain gage unit, with bonding pads already provided, to the beam using a suitable bonding agent or cement, e.g., an epoxy resin, so as to form a non-hermetically sealed pressure sensing module;
(c) attaching an interface (interconnect or extender) board to one end of the mechanical sub-assembly, [using a suitable bonding agent or cement, e.g., an epoxy resin], with the board having a plurality of terminal pads;
(e) attaching wire leads between the bonding pads on the gage unit and a first set of terminal pads on the interface board;
(f) attaching additional wire leads to a second complementary set of terminal pads on the interface board;
(g) passing the wire leads through a suitable header;
(h) attaching the header to the previously described mechanical sub-assembly so as to form an hermetically sealed pressure-sensing module.

The foregoing hermetically sealed pressure-sensing module is then tested by subjecting it to temperature and pressure cycling. This operation checks out the response of the diaphragm and beam to pressure variations, and also checks out the response of the two gages of gage unit. Then the module is used to form a completed pressure transducer product having terminal means for connecting it to an exterior circuit. Formation of the completed transducer product may be accomplished by an assembly method comprising at least some of the following steps (i) - (n);
(i) mounting an input/output Wheatstone bridge circuit board to the module and connecting the wire leads that protrude from the header to input terminals on the input/output circuit board;
(j) connecting output lead wires to the output terminals on the input/output circuit board;
(k) trimming selected resistors of the bridge on the input/output circuit board based on data acquired from prior testing of gage unit 20;
(l) surrounding a major portion of the sensing module with an exterior housing;
(m) securing the exterior housing to the sensing module; and
(n) closing off the housing with a connector element.

Other aspects of the improved method are described in or rendered obvious by the following detailed description which is to be considered together with the accompanying drawings.

### THE DRAWINGS

Fig. 1 is a longitudinal sectional view of a mechanical assembly constituting a non-hermetically sealed pressure-sensing module made according to a preferred embodiment of the invention;
Fig. 2 is an exploded view of the assembly of Fig. 1;
Fig. 3 is a plan view illustrating a strain gage unit as employed in the method of the present invention;
Fig. 4 is a sectional view in side elevation of the diaphragm unit of the assembly shown in Figs. 1-3;
Fig. 5 is a schematic end view on an enlarged scale, looking from right to left in Fig. 2, illustrating the disposition of the connector board that is mounted to the assembly shown in Figs. 1 and 2;
Fig. 6 is a side view in elevation of a completed transducer embodying the assembly illustrated in Figs. 1-5;
Fig. 7 is an exploded view of a completed transducer embodying the sensing module illustrated in Figs. 1-6;
Fig. 8 is a sectional view in side elevation (taken along line 8-8 of Fig. 9) of the header (64) member used in the embodiment of Figs. 1-7;
Fig. 9 is an end view of the same header member looking from right to left in Fig. 8;
Fig. 10 is an end view of the completed transducer looking from right to left in Fig. 6;
Fig. 11 schematically illustrates the bridge and amplifier circuit embodied in the input/output board;
Fig. 12 is a view like Fig. 1 of an alternative embodiment of the invention;
Fig. 13 is an exploded view like Fig. 2 of the same alternative embodiment of the invention;
Fig. 14 is a cross-sectional view of the beam element used in the alternative embodiment of the invention;
Fig. 15 is a rear view in elevation of the same beam element;
Fig. 16 is a cross-sectional view in side elevation of a spacer member employed in the alternative embodiment of the invention; and
Fig. 17 is a side view in elevation of a header member used in the attendant embodiment;
Fig. 18 is a rear view in elevation of the header member shown in Fig. 17; and
Fig. 19 is an exploded view like Fig. 7 of the alternative embodiment of the invention.

In the several figures, like numerals designate like parts. Also various figures are drawn to different scales to better illustrate and describe selected details of the invention.

### PREFERRED EMBODIMENT OF THE INVENTION

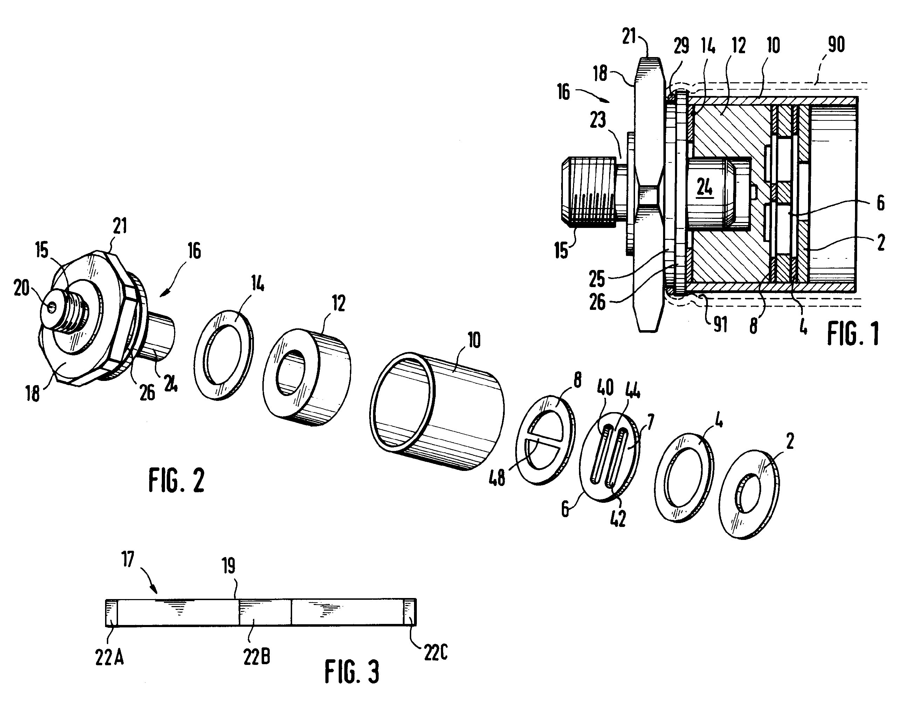

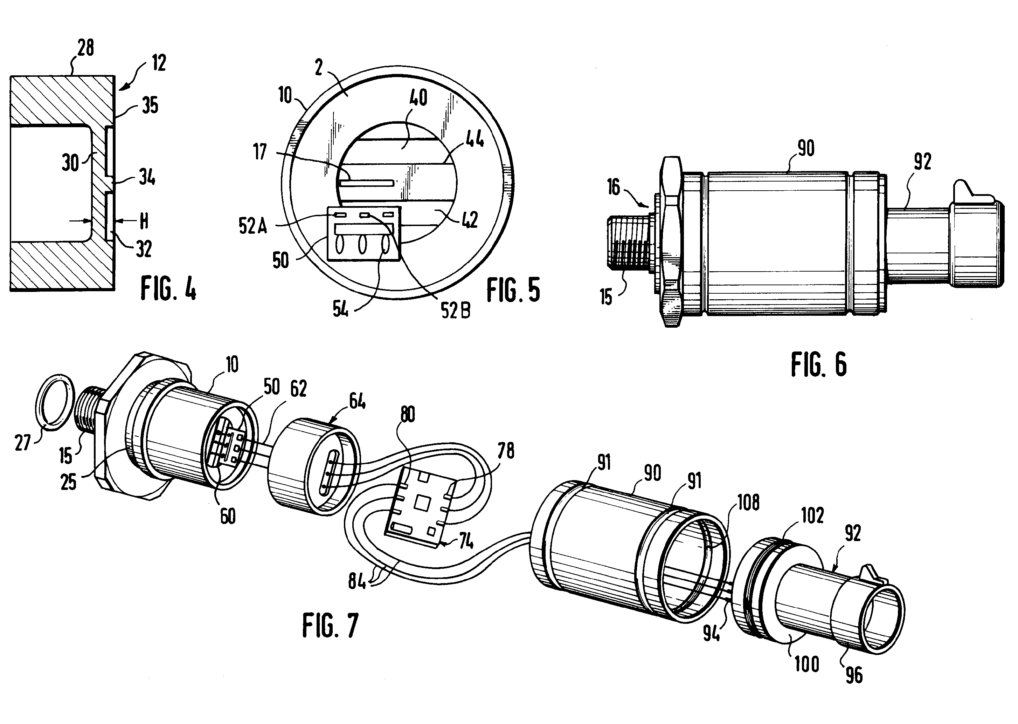

Figs. 1-10 illustrate a pressure transducer made according to a preferred embodiment of the present invention and designed for measuring pressures above about 500 psi. This transducer comprises a sensing module that comprises the components shown in Figs. 1-4, plus a housing and other components illustrated in Fig. 5-10.

Referring now to Figs. 1-5, there is shown a sensing module comprising a top ring or spacer 2, a braze preform in the shape of a circular ring 4, a beam unit 6, a beam braze preform in the shape of a circular ring 8, an inner cylindrical case 10, a diaphragm unit 12, a braze preform in the shape of a circular ring 14, and a port member 16, plus a strain gage unit 20 (Fig. 3). The strain gage unit 17 comprises an elongate narrow strip or sliver 19 of single crystal P-type silicon preferably having a <111> or an <110> orientation along its longitudinal axis, with the strip having a resistivity of 0.10 to 0.16 ohm-cm and less that 100 dislocations per cm², with an end to end gage resistance of about 700 to about 1000 ohms. Also it is preferred that the resistance balance between gage halves is within 3% of value. It is preferred that the strip have a thickness of about .0005˝ to .0015˝, with resistance being the governing factor as to the thickness of the strip. Preferably, but not necessarily, strip 21 has a length of approximately .205 inches and a width of approximately .01˝, as seen in Fig. 3. The strip is provided with metallized pads 22A-C which are suitable for ultrasonic wire bonding. The pads may be formed on the strip as islands spaced from the side and adjacent end edges of the strip, or, as shown in Fig. 3, they may extend across the full width of the strip. Preferably the metallized pads are formed by deposition of metal onto the silicon, and preferably the deposited metal is gold. It is preferred that the pads maintain ohmic contact with silicon over a wide range of temperature ranges. It is also preferred that the strip have smooth edges and also be free from microcracks as may be produced by cutting and/or chemical etching.

The components 2, 6, 10, 12 and 16 are all made of metal. Preferably they are made of stainless steel, but some other metal may be used to fabricate those parts. Preferably the preforms 4, 18 and 14 are made of a silver braze material that melts in the range of from 1300°F to 1600°F. In practicing this invention, the brazing temperature (i.e., the temperature required to melt the brazing material well enough to accomplish brazing) can typically vary from the melting point to a temperature as much as 50°C above the melting point.

Port member 16 has a through-bore 20 and comprises an exteriorily threaded extension 15 at one end for making a screw connection to a pressure-delivery member (not shown) that delivers a fluid whose pressure is to be measured into bore 20. A groove 23 may be provided in extension 15 to accommodate a resilient O-ring 27 (Fig. 7) to assure a tight sealed connection with the pressure-delivery member. Port member 16 also has an extension 24 at the other end which is designed to be inserted into the diaphragm unit 12, and a flange 26. Port 16 also has a second flange 18 having a polygonally-shaped edge surface 21, preferably of hexagonal configuration, for use in turning or holding the transducer when it is being connected by threaded extension 15 to the mating pressure-delivery member (not shown). A groove 25 separates flanges 18 and 26.

As seen best in Figs. 2 and 4, the diaphragm unit 12 comprises a circular cylinder 28 that is closed off at one end by a diaphragm 30, with diaphragm 30 having a center post 34 formed integral with one side thereof. Diaphragm 30 has a relatively small thickness as compared to the wall thickness of cylinder 28. Preferably diaphragm 30 is formed by making diaphragm unit 12 with an end wall having a selected thickness H (Fig. 4), and machining an annular groove 32 in the outer face of that end wall so as to form the relatively thin diaphragm 30 and the circular center projection or post 34. Alternatively, diaphragm 30, groove 32 and post 34 may be formed by mechanically deforming the end wall of diaphragm unit 12, e.g., by a die-forming operation using a mechanical press. The internal diameter of cylinder 28 of the diaphragm member 12 is sized so as to make a close fit with extension 24 of port 16.

Braze preform 14 is sized so that it will slip over extension 24 of port member 16 and also made a close fit within inner case 10. The outer diameter of the cylinder portion 28 of diaphragm unit 12 is sized so that it will also make a close fit within inner case 10. Beam unit 6 is in the form of a circular disk and its outer diameter is sized so that it will make a close fit in inner case 10. Braze preforms 4 and 8 also have an outer diameter sized so as to make a close fit within inner case 10. Beam unit 6 is made with two parallel elongate holes 40 and 42 so as to form an elongate diametrically-extending beam 44 that is anchored at both ends. However, the effective length of beam 44 is determined by the i.d. of top ring 2, since the latter engages beam unit 6. Preform 8 has a diametrically extending narrow section 48. Beam unit 6 and braze preform 8 are oriented so that diametral section 48 extends at a right angle and in bisecting relation to beam 44, i.e., section 48 intersects the midpoint of beam 44 at a right angle.

The foregoing components are assembled in the order shown in Figs. 1 and 2, so that braze preform 14 and diaphragm unit 12 fit over port extension 24, inner case 10 surrounds diaphragm unit 12 and preform 14 and engages flange 26. Braze preform 8 is disposed within inner case 10 in engagement with the peripheral shoulder portion 35 (Fig. 4) of diaphragm 12, while beam unit 6 is sandwiched between preforms 4 and 8 and oriented so that beam 44 extends at a right angle to the transversely-extending section 48 of preform 8 (see Fig. 2). Preform 4 engages the peripheral ring portion 7 of beam unit 6. The inner diameters of preforms 4 and 8 are virtually identical to one another and sized so that the braze element 4 will not overlap the ends of the elongate holes 40 and 42 in beam unit 6. The top ring or spacer 2 engages preform 4 and also fits within the inner case 10. The inner diameter of top ring 2 is smaller than the inner diameter of preforms 4 and 8. Once the components have been assembled in the manner shown in Figs. 1 and 2, they are subjected to heat so as to cause the brazing elements 4, 8 and 14 to melt and fuse to the adjacent components, thereby forming an integrated non-hermetically sealed sensor assembly wherein inner case 10 is brazed to top ring 2, beam unit 6, diaphragm unit 12 and flange 26 of port member 16 by the fused preforms 4, 8 and 14.

Thereafter, a silicon strain gage unit 17 (see Fig. 3) is attached to beam 44. As shown in Fig. 5, the gage unit is mounted to one side of the center line of the beam 44 on the face thereof that faces away from the port 16.

The resulting sensor assembly is combined with other elements to form an hermetically sealed sensor module. This involves attaching an interconnect or interface board 50 to the top ring 2 (Figs. 1, 5 and 7). Interface board 50 is attached to top ring 2 by suitable means, preferably by a cement such as a non-conductive epoxy resin. The side of board 50 that faces away from top ring 2 carries three electrically conductive input terminal pads 52 and three electrically conductive output terminal pads 54, with the corresponding ones of those tabs being interconnected by the board. Preferably pads 52 are aligned with pads 54, and the pads in each set are spaced from one another by approximately the same distance as the spacing between the pads 22A-C of gage unit 20. Accordingly, it is preferred that interface board 50 be attached to top ring 2 so that its three pads 52 are aligned with pads 22A-C respectively of the gage unit.

Referring now to Fig. 7, the terminal pads 52 of interconnect board 50 are coupled to conductive pads 22A-C of the gage unit by means of three individual wires 60. Three additional wires 62 are connected at one end to the three output terminal pads 54 on interconnect board 50.

Referring now to Figs. 7-9, a spacer or header 64 is provided with a groove 66 at one side which is sized so as to receive and make a close fit with the adjacent end of inner case 10. Spacer or header unit 64 has three apertures 68A, B and C, which are aligned on a chord of a circle concentric with the header unit 64. The three wire leads 62 pass through holes 68A, B and C and are hermetically sealed therein by a suitable potting compound, e.g., an epoxy resin or a glass filled cement.

Header 64 is secured to case 10 by any suitable means capable of making a permanent hermetic seal, e.g., by a cement, soldering or welding. Preferably an epoxy resin is used to secure header 64 to case 10.

The resulting assembly is identified as a "moisture-sealed" pressure sensing module.

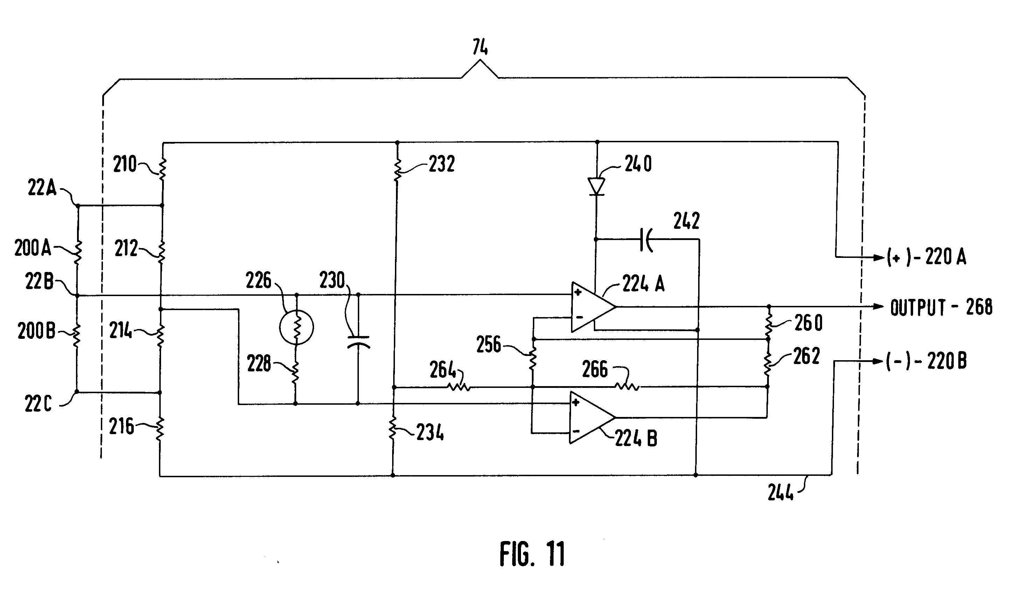

The side of the header opposite to the groove 66 has an elongate recess 70 that encompasses the apertures 68A, B and C. That same side of the header 64 has a counterbore so as to form a shelf 72 which is sized to accept and support on amplifier circuit board 74 (Fig. 7). The latter comprises a plurality of electronic components (described hereinafter in connection with Fig. 11), plus three conductive input terminal pads 78 and three conductive output terminal pads 80. Circuit board 74 is bonded to shelf 68 by means of a suitable cement, e.g., an epoxy resin.

The wire leads 62 are connected to the three input terminal tabs 78 on board 74. The three output terminal pads 80 of that board are connected to three wire leads 84. The finished pressure transducer also comprises an exterior cylindrical housing 90 (Figs. 6 and 7). Housing 90 is formed with two corrugations 91 that provide interior ribs 93 at each end thereof. Housing 90 extends over inner housing 10 and is secured to port member 16. Housing 90 may be secured to port member 16 by various means. Preferably, as shown in dotted lines in Fig. 1, housing 90 is disposed so that one of its ribs 93 engages flange 26, and then it is secured in place by crimping, i.e., rolling its end by mechanical deformation over into the groove 25 between flanges 19 and 26. An O-ring 29 is preferably positioned in groove 25 before crimping, so as to assure that it will be compressed and make a tight seal with port member 16 when the end of housing is rolled over into groove 25.

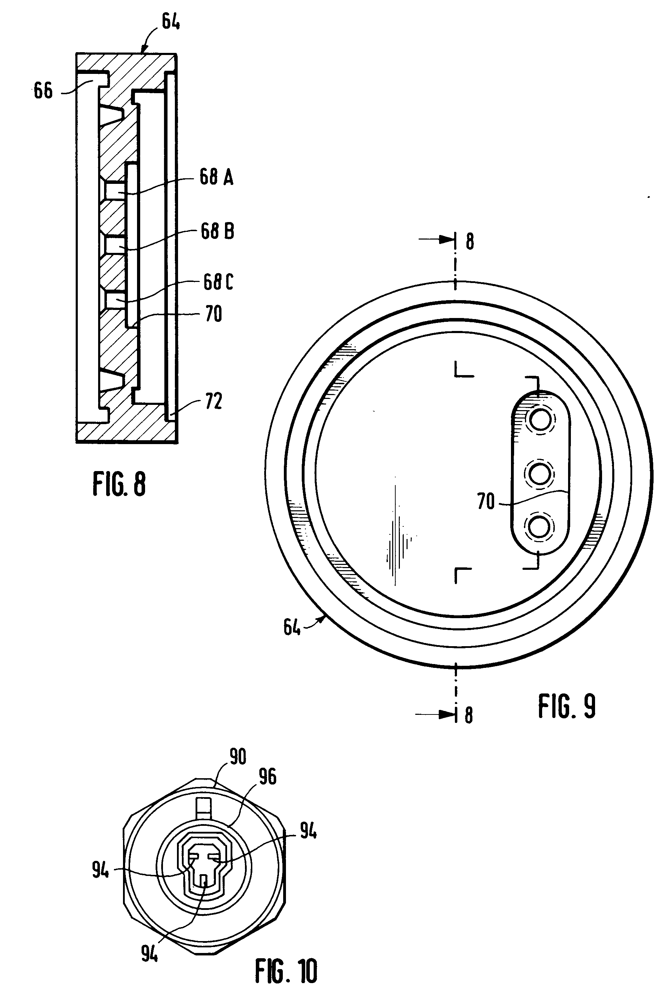

Wire leads 84 extend into housing 90 and are connected to three conductive terminal pins 94 of a connector member 92. The latter is a female connector member, forming one half of a conventional connector of a type which is sold in the trade under the designation "Packard Metripak". Female connector member 92 comprises the three terminal pins 94 (Figs. 7 and 10) which are insulated from one another, plus a hollow cylindrical extension 96 which is adapted to receive a complementary male connector member (not shown) adapted to make electrical connections with terminal pins 94 inside of extension 96. As seen in Fig. 7, connector member 92 includes a peripheral flange 100 having a groove in which is disposed an O-ring 102. Flange 100 is sized to make a close fit within housing 90, with flange 100 engaging the other rib 93. The O-ring 102 serves to make an hermetic seal between housing 90 and connector member 92. Connector member 92 may be cemented or brazed to the housing 90 so as to assure a permanent hermetic seal. Preferably, however, the adjacent end of exterior housing 90 is mechanically rolled over flange 100, so as to mechanically lock the housing and connector member together, with O-ring 102 assuring an hermetic seal.

Referring now to Fig. 11, the electrical components and connections presented by amplifier circuit board 74 are illustrated between the two vertical broken lines. The circuit shown in Fig. 11 comprises two strain gages or sensors 200A and 200B (corresponding to the two strain gage sensors existing in silicon strip 21 between pads 22A and 22B and between pads 22B and 22C). Strain gages 200A and 200B are connected into a voltage divider network comprising resistors 210, 212, 214 and 216. One end of strain gage 200A is connected by pad 22A to the junction of resistors 210 and 212. The opposite end of resistor 210 is connected to a positive excitation terminal 220A. The opposite end of strain gage unit 200B is connected by pad 22C to the junction of resistors 214 and 216. The opposite end of resistor 216 is connected to a negative excitation/output terminal 220B. The junction between strain gage units 200A and 200B is connected by pad 22B to the positive terminal of a first operational amplifier 224A. Additionally, a thermistor 226 and a resistor 228 are connected between pad 22B and the positive input terminal of a second operational amplifier 224B. A capacitor 230 is connected between pad 22B and the positive input terminal of operational amplifier 224B. An additional pair of resistors 232 and 234 are connected across the voltage divider network provided by resistors 210, 212, 214 and 216. A diode 240 is connected between terminal 220A and a control terminal of operational amplifier 224A. A second capacitor 242 is connected between that control terminal and a second control terminal of operational amplifier 224A. Capacitor 242 is also connected to the line 244 that connects the resistor 216 to the output/excitation terminal 220B.

Additionally, a resistor 256 is connected between the negative input terminal of operational amplifier 224A and the negative input terminal of operational amplifier 222B. Two additional resistors 260 and 262 are connected between the output terminals of operational amplifiers 224A and B. Two additional resistors 264 and 266 are connected between the junction of resistors 232 and 234 and the output terminal of amplifier 224B. The output terminal of amplifier 224A is connected to circuit output terminal 268. The junction of resistors 264 and 266 is connected to the negative input terminals of amplifiers 224A and 224B. Although not shown, it is to be understood that the terminals 220A, 220B and 268 are connected by wires 84 to pins 94 of connector member 92.

As is appreciated by persons skilled in the art, the circuitry shown in Fig. 11 comprises a Wheatstone bridge in the form of the two strain gage sensors 200A and 200B and the resistors 212 and 214, with the additional resistors and capacitors functioning to provide the proper voltage between resistors 210 and 212 on the one hand and between resistors 214 and 216 on the other hand, and to provide an accurate output signal in response to changes in the fluid pressure applied to the transducer. A d.c. excitation signal is applied between terminals 220A and 220B and the output signal is taken between terminals 268 and 220B.

The amplifier unit shown in Fig. 11 offers the advantage that it is ratiometric; if the voltage applied across terminals 220A and 220B increases, the output voltage at terminal 268 increases ratiometrically. In practice, the output voltage of the transducer is commonly coupled to an analog-to-digital converter, thereby allowing the transducer to serve as an input signal source for a digital microprocessor or controller. The capacitors 230 and 242 serve to control the response time of the unit.

The apparatus shown in Figs. 1-11 is manufactured according to the following method:

The components shown in Fig. 1 are assembled together in the manner shown in Fig. 2, and thereafter the assembled components are heated so as to cause the preforms 4, 8 and 14 to melt and thereby braze together the components that are contacted by those braze preforms. Thereafter, gage unit 17 (Fig. 4) is bonded to the beam 44 by means of a suitable cement, preferably a non-conductive epoxy resin. The gage unit is mounted on the side of the beam that faces the port 16, and also is located to one side of the midpoint of beam 44, as shown in Fig. 5. Thereafter, the interconnect board 50 is cemented to the top ring 2 by a suitable cement, e.g., an epoxy resin, so that it lies to one side of the center line of beam 44 in alignment with the gage unit. Preferably, but not necessarily, the interconnect board is positioned so that its center pad 52B is aligned with the center pad 22B of the gage unit. The foregoing assembly is then heated to a suitable temperature for a selected time, e.g., to about 300°F for about two hours, so as to cure the epoxy resin, and thereby assure a permanent connection between strain gage unit 17 and beam 44 and the interconnect board 50 and top ring 2. It is to be appreciated that interconnect board 50 is mounted on the side of top ring 2 that faces away from port 16.

Thereafter, the three wire leads 60 are bonded to the pads 22A-C of the gage unit, and also to the three input pads 52 of interconnect board 50. Next, three wire leads 62 are attached to the three output pads 54 of board 50. Those interconnections, like the interconnections to strain gage pads 22A-C and the three input pads 52, are made preferably by compression bonding using gold leads. The three wire leads 62 are passed through the openings 68A, B and C of header member 64. The header member is then attached to the inner housing 10, with the inner housing 10 fitting into the groove 66. The header unit 64 may be secured to the inner housing 10 by brazing or solder, but preferably by a suitable cement, e.g., an epoxy resin. Once that has been done, a suitable potting compound, e.g., an epoxy resin, is introduced into the openings 68A, B and C so as to provide an hermetic seal between header 64 and the three wire leads 62. At this point the port 16, inner housing 10 and header 64 form an hermetically sealed sensor assembly.

Still referring to Figs. 1-7, the three wire leads 62 are then attached to the three input conductive terminal pads 78 of input/output circuit board 74, and then the latter board 74 is positioned in the header unit 64 in engagement with the shoulder 68. Input/output board 74 is secured to the header unit by means of an epoxy resin which bonds the amplifier board to the shoulder 68. Thereafter, three additional wires 84 are bonded to the three conductive output pads 80 of board 74. The three leads 84 are passed through the outer housing 90. Then the outer housing 90 is slipped over the header member 64 and flange 26 of port member 16, and secured to the latter by rolling its end over into the space between flanges 18 and 26. Preferably an O-ring 29 is located in groove 25 and the end of housing 90 is crimped over the O-ring so as to asssure a high quality hermetic seal. Then the three wire leads 84 are attached to the three terminal pins 94 of connector member 92, after which the connector member 92 is inserted into the opposite end of housing 90, and attached thereto by mechanically rolling the adjacent end of housing 90 over flange 100 of connector member 92 as previously discussed.

Preferably, the foregoing method of assembly is interrupted by two testing steps. In the first step, the non-hermetically sealed module is tested by connecting the three leads 60 (or 62) to suitable test apparatus. In that second testing step, the three lead wires 84 are connected to suitable test apparatus. The transducer is calibrated (before assembly of exterior housing 90) by laser trimming the resistors 210, 212, 214, 216, 250, 260 and 264.

### ALTERNATIVE EMBODIMENT OF THE INVENTION

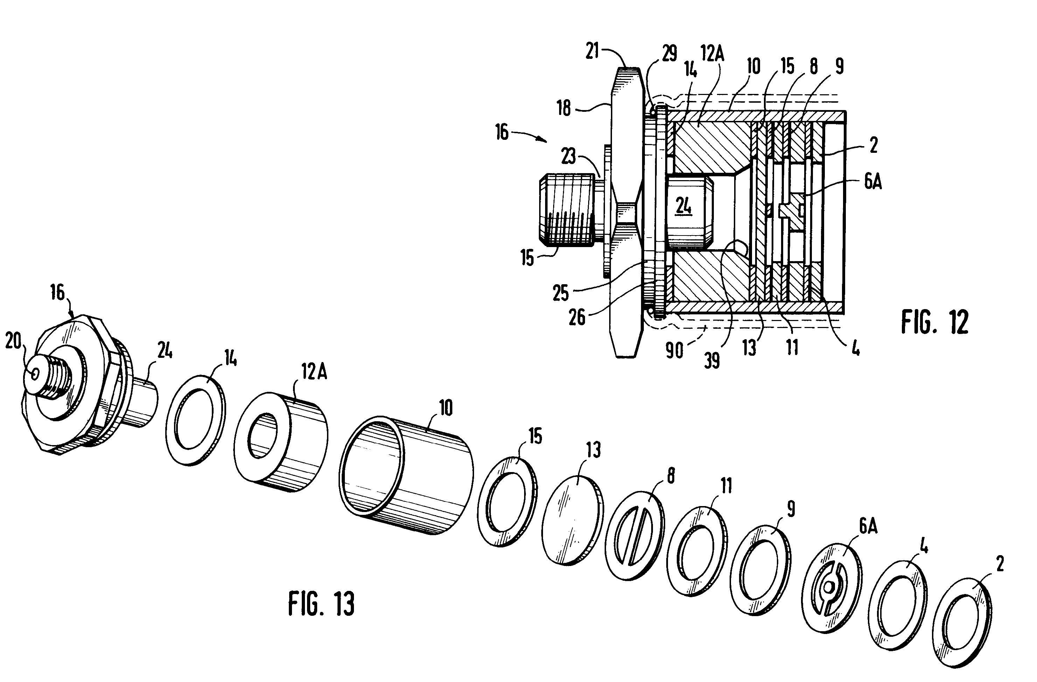

Figs. 12 to 19 show a device designed to operate at a pressure in the range of about 100 psi to about 500 psi. Unless otherwise specified, the elements, parts or features shown in Figs. 12 to 19 are identical or similar to parts shown in Figs. 1-11 or described in relation to the transducer shown in Figs. 1-11.

In this case, the sensing module comprises top spacer ring 2, a beam/post member 6A, a spacer ring 11, a diaphragm support 12, a diaphragm 13, inner case 10, port member 16, and annular braze preforms 4, 8, 9, 14 and 15. The alternative embodiment illustrated in Figs. 12 to 19 differs from the preferred embodiment described above and illustrated in Figs. 1-11 in that it comprises, in place of diaphragm unit 12 and the beam unit 6 previously described, a beam/post unit 6A, a spacer ring 11, a diaphragm support 12A, and diaphragm member 13, plus additional braze preforms 9 and 15. Preferably parts 6A, 11, 12A and 13 are made of the same material as port member 16.

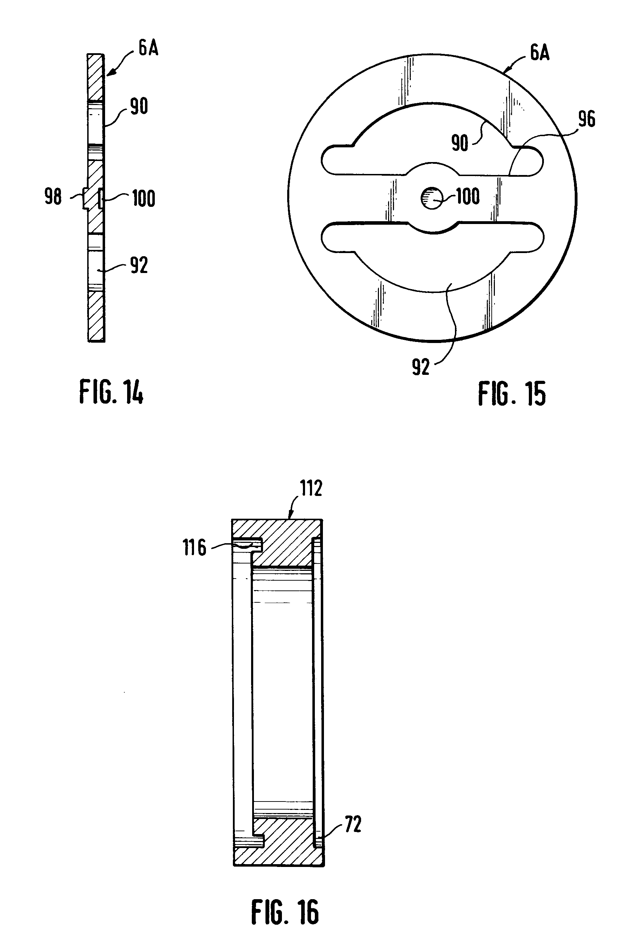

The beam/post unit 6A is illustrated in cross-section in Figs. 14 and 15. It essentially comprises a circular disc having two elongate, partly arcuate holes 90 and 92 formed therein so as to form a diametrically extending beam 96. The latter is formed with a post in the form of a protrusion or projection 98 on one side. In this particular configuration, the member 6A may be formed by a metal stamping procedure, so that formation of post 98 is accompanied by formation of a cavity 100 on the opposite side of beam 96.

The diaphragm 13 is essentially a circular metal disk with a thickness that permits it to flex when subjected to fluid pressures within a predetermined range, e.g., 0-100 or 0-500 psi.

The diaphragm support 12A is essentially a cylindrical tube having an o.d. sized to make a snug fit in inner case 10. The i.d. of diaphragm support 12A is sized to accept and make a close fit with extension 24 of port member 16. Preferably, but not necessarily, the center hole of support 12A is chamfered as shown at 39 on the side facing diaphragm 13. The center hole of support 12A serves to transmit the fluid pressure applied via port member 16 to diaphragm 13. Spacer ring 11 and diaphragm support 12A, when brazed together by braze preforms 8 and 15, act to provide a rigid support for an annular marginal portion of diaphragm disk 13. The effective fluid pressure-responsive area of diaphragm 13 is determined by the i.d. of spacer ring 11.

The alternative embodiment shown in Figs. 12 to 19 is assembled in essentially the same manner as the product shown in Figs. 1-11. The components shown in Fig. 12 are assembled together in stacked or surrounding relation to one another, with the components 2, 4, 6A, 9, 11, 8, 13, 15, 12A and 14 all fitting over the extended post section 24 of port member 16 and fitting within the inside case 10. These components are brazed together by heating the assembly of components together at a suitable temperature for a selected period of time. The portion of diaphragm 13 located inwardly of spacer ring 11 is free to flex toward and away from diaphragm support 12A in response to changes in fluid pressure applied through center hole 39.

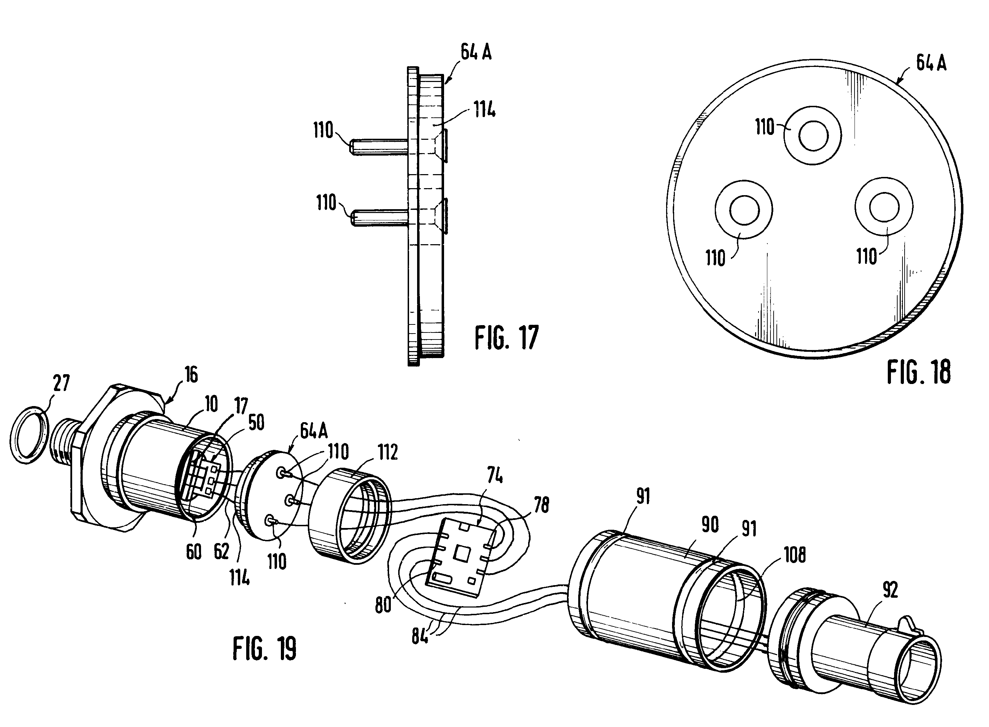

Thereafter, (as shown in Fig. 19) that sub-assembly is secured to strain gage unit 17 and an interconnect board 50 as previously described, and the strain gage unit and interconnect board are connected by leads 60 as previously described.

In this alternative embodiment a header unit 64A and a spacer ring 112 are used (see Fig. 19). Header 64A has three electrically insulated pins 110. These pins are connected by three wires 62 that pass through spacer ring 112 and are attached to the three input pads 78 on input/output board 74. Three wires 84 connect the three output terminal pads 80 of circuit board 74 to connector member 92 as previously described. Header 64A is designed to mate with inner case 10. It has a reduced diameter section 114 which is sized so as to fit within and make a close fit in the adjacent end of inner case 10. Spacer ring 112 has a groove 116 at one side which is sized so as to receive and make a close fit with the adjacent inner end of inner case 10. It also has a counterbore that forms a shelf 72 which is sized to accept and support circuit board 74. Header 64A and spacer ring 112 are secured to inner case 10 by brazing or a suitable cement.

Once the components shown in Figs. 12-18 have been secured together to form an integral sub-assembly, the additional components shown in Fig. 19 are attached in the manner previously described so as to form an hermetically sealed transducer product having all of the advantages of the present invention. Testing is conducted as described previously in connection within Figs. 1-11.

An important advantage of this invention resides in the use of a semiconductor sliver that is processed so as to provide two strain gage sensors, with the sliver being arranged so that one sensor responds in tension and the other sensor responds in compression. Because both sensors are formed in a common sliver, their physical properties match and hence it is not necessary to trim either sensor in order to achieve balanced responses. Instead relatively easy trimming of selected discrete resistors on the amplifier board 74 is all that is required to properly calibrate the transducer. Such trimming is less costly to conduct than trimming of the strain gages, and also may be done more rapidly and conveniently.

Another advantage is that top ring 2 serves to delineate the exact length of beam 44. The i.d. of ring 2 determines the active portion of the beam that responds to deflection. Hence the effective length of beam 44 can be varied by changing the i.d. of ring 2.

Still another advantage is that the pressure range of the device can be varied by changing the thickness of beam 44 and diaphragms 13 and 30, with a higher pressure range requiring thicker and hence stiffer beams and diaphragms.

Obviously the invention may be practiced otherwise than as specifically described and illustrated in connection with the drawings. Thus, the method and order of assembling and bonding components may be varied, depending, for example, on the materials of which the components are made and the specific geometric form and location of the components. Thus, extender board 50 may be mounted to top ring 2 by an epoxy cement after curing of the epoxy cement used to bond gage unit 17 to beam 44, or curing of the epoxy cement holding gage unit 17 to beam 44 may be carried out simultaneously with curing of the epoxy cement that holds extender board 50 in place. Also the outer case 90 need not be secured to port member 16 and connector member 92 by mechanical rolling; instead brazing or a suitable cement could be used to form an hermetic connection between housing 90 and the port and connector members. Also another form of connector member may be used in place of the connector member shown at 92. It also is contemplated that the gage unit shown in the drawings may be augmented by a second gage unit mounted on the opposite side of the beam or on the same side of the beam but to the other side of its midpoint. Still other modifications that do not depart from the principles of the invention as defined in the appended claims will be obvious to persons skilled in the art.

Furthermore, it is to be understood that the following claims are intended to cover both the method of making the sub-assemblies of Figs. 1 and 12, and also of the total assemblies of Figs. 6, 7 and 19.

## Claims

1. Method of making a pressure transducer comprising the steps of:
a) providing a casing (10), a pressure-transmitting port member (16), a flexible diaphragm (30;13), a beam unit (6;6A) comprising a beam (44;96) having first and second opposite ends and a margin section (7) which surrounds said beam (44), means (28;12A) for supporting at least said diaphragm (30;13) or said beam unit (6, 6A) so that said beam (44) extends parallel to and is spaced from said diaphragm (30;13), a force-transmitting means (34;98) extending between said beam (44) and said diaphragm (30;13) so that said beam (44) will be deflected responsively when said diaphragm (30;13) is deflected by a fluid pressure applied via said port member (16), at least one spacer member (2,11), and a plurality of preformed heat-responsive bonding elements (14,15,8,9,4) for securing the foregoing items together;
b) assembling said port member (16), said diaphragm (30;13), said beam unit (6;6A), said spacer member (2,11), said supporting means (28;12A), said force-transmitting means (34;98), and said plurality of preformed heat-responsive bonding elements (14,15,8,9,4) so that said diaphragm (30;13), said beam unit (6;6A), said spacer member(s) (2,11), said supporting means (28), said force-transmitting means (34;98), and said heat-responsive bonding elements (14,15,8,9,4) are disposed in adjacent and contacting relation, with said diaphragm (30;13) being in a plane that extends at a right angle to the longitudinal axis of said port member (16);
characterized in
c) that the outer diameters of the diaphragm unit (12;12A,13), said beam unit (6;6A), said spacer member(s) (2,11), and said preformed heat-responsive bonding elements (14,15,8,9,4) are sized so that each of these items makes a close fit within the casing (10);
d) that said foregoing items are disposed within said casing (10) in adjacent and contacting relation;
e) and that the resulting assembly is heated so as to cause said heat-responsive bonding means (14,15,8,9,4) to bond together said casing (10), said port member (16), said diaphragm (30;13), said supporting means (28;12A), said force-transmitting means (34;98), said beam unit (6;6A), and said spacer member (2,11).

2. Method according to claim 1 characterized in that the pressure-transmitting port member (16) comprises a flange (26), and is positioned so that the casing (10) engages said flange (26).

3. Method according to claim 1 or 2 characterized in that said diaphragm unit (12;30), said beam unit (6,44), said spacer member (2) and said heat-responsive bonding means (14,8,4) are disposed within said casing (10) so that the order of position in the casing (10) starting at the port member (16) is diaphragm unit (12), beam unit (6) and spacer member (2), and with separate ones of said heat-responsive bonding means (14,8,4) being disposed between and engaging
(i) said port member (16) and said diaphragm unit (12,30),
(ii) said diaphragm unit (12,30) and said beam unit (6), and
(iii) said beam unit (6) and said spacer member (2).

4. Method according to claim 3 characterized in that said force-transmitting means (34) is formed integral with said diaphragm (30).

5. Method according to claim 4 characterized in that one (8) of said bonding elements which is positioned between said diaphragm unit (12,30) and said beam unit (6) is in the form of a ring with a diametrically extending narrow section (48) and is oriented so that said narrow section (48) extends at a right angle to the beam (44) of said said beam unit (6) and that in step (e) said one bonding means (8) causes bonding of said force-transmitting means (34) to the beam (44).

6. Method according to claim 1 or 2 characterized in that said diaphragm unit comprises a diaphragm supporting member (12A) and a diaphragm (13), said beam unit (6A), said spacer members (2,11) and the bonding elements (14,15,8,9,4) are disposed within said casing (10) so that the order of position in the casing (10) starting at the port member (16) is diaphragm supporting member (12A), diaphragm (13), spacer (11), beam unit (6A), and spacer member (2), with said force-transmitting means (98) extending between said beam unit (6A) and said diaphragm (13), and with separate ones of said heat-responsive bonding means (14,15,8,9,4) being disposed between and engaging
(i) said port member (16) and said diaphragm supporting member (12A),
(ii) said diaphragm supporting member (12A) and said diaphragm (13),
(iii) said diaphragm (13) and said spacer (11),
(iv) said spacer (11) and said beam unit (6A) and
(v) said beam unit (6A) and said spacer member (2).

7. Method according to claim 6 characterized in that said beam unit (6A) comprises
(i) an annular beam support,
(ii) a diametrically-extending beam (96) supported at both ends by said beam support and integrally formed therewith, and
(iii) an axially-extending force-transmitting projection (98) formed integral with said beam (98).

8. Method according to claim 7 characterized in that that one (8) of said bonding elements which is positioned between said diaphragm (13) and said spacer member (11) is in the form of a ring with a diametrically extending narrow section, and that in step (e) said one bonding element (8) causes bonding of said force-transmitting projection (98) to said diaphragm (13).

9. Method according to any one of the preceding claims characterized by the further step of bonding a strain gage unit (17) to said beam (44) after step (e).

10. Method according to claim 9 characterized in that said strain gage unit (17) is bonded by a thermo-setting cement.

11. Method according to claim 9 or 10 characterized in that said strain gage unit (17) is a single sliver (19) of silicon or germanium, and said single sliver (19) is disposed to one side of the midpoint of said beam (44).

12. Method according to claim 11 characterized in that said sliver (19) comprises at least three bonding pads (22A,22B,22C) located at the opposite ends and also at the midpoint of said sliver (19).

13. Method according to claim 12 characterized by the step of attaching an interconnect board (50) to said spacer member (2), said interconnect board (50) having three conductive pads (52), and thereafter connecting wire leads (60) between the conductive pads (52) on said interconnect board (50) and the bonding pads (22A,22B,22B) on said strain gage unit (17).

14. Method according to any of the preceding claims characterized by the further step of inserting said casing (10) into a hollow outer housing (90) and securing one end of said outer housing (90) to said port member (16).

15. Method according to claim 14 characterized by the further step of closing off the other end of said housing (90) with an electrical connector (92) having conductive terminals (94) that are coupled to the conductive pads (54) on said interconnect board (50).

## Patentansprüche

1. Verfahren zur Herstellung eines Druckwandlers mit den folgenden Schritten:
a) Beschaffung eines Mantelelements (10), eines druckübertragenden Elements (16) mit einer Öffnung, einer flexiblen Membran (30;13), einer Balkeneinheit (6;6A), bestehend aus einem Balken (44;96) mit erstem und zweitem Ende und aus einem Randbereich (7), der den Balken (44) umgibt, eines oder mehrerer Elemente (28;12A) zur Abstützung mindestens der Membran (30;13) oder der Balkeneinheit (6,6A), so daß sich der Balken (44) parallel sowie mit Abstand zu der Membran (30;13) erstreckt, eines kraftübertragenden Elements (34;98), das sich zwischen dem Balken (44) und der Membran (30;13) erstreckt, so daß der Balken (44) abgebogen wird, wenn die Membran (30;13) von einem über das Öffnungselement (16) angelegten Flüssigkeitsdruck durchgebogen wird, mindestens eines Abstandselements (2,11), sowie einer Mehrzahl von vorgeformten, wärmeempfindlichen Verbindungselementen (14,15,8,9,4), um die vorgenannten Gegenstände aneinander festzulegen;
b) Zusammenbau des Öffnungselements (16), der Membran (30;13), der Balkeneinheit (6;6A), des Abstandselements (2,11), des kraftübertrgenden Elements (34;98) und der Vielzahl vorgeformter, wärmeempfindlicher Verbindungselemente (14,15,8,9,4), so daß die Membran (30;13), die Balkeneinheit (6;6A), Abstandselement(e) (2,11), Abstützungselement(e) (28), das kraftübertragende Element (34;98) und die wämeempfindlichen Verbindungselemente (14,15,8,9,4) in angrenzender und berührender Beziehung angeordnet sind, wobei die Membran (30;13) sich in einer Ebene befindet, die sich im rechten Winkel zur longitudinalen Achse des Öffnungselements (16) erstreckt;
dadurch gekennzeichnet,
c) daß die äußeren Durchmesser der Membraneinheit (121;12A,13), der Balkeneinheit (6;6A), des (der) Abstandselements (-e) (14,15,8,9,4) eine derartige Größe aufweisen, daß jedes dieser Elemente in das Mantelelement (10) einen eng anliegende Sitz aufweist;
d) daß die vorgenannten Gegenstände in das Mantelelement (10) in angrenzender und berührender Beziehung angeordnet sind;
e) und daß die resultierende Montageeinheit erwärmt wird, um die wärmeempfindlichen Verbindungselemente (14,15,8,9,4) dazu zu veranlassen, das Mantelelement (10), das Öffnungselement (16), die Membran (30;13), Abstützungselement(e) (34;98), die Balkeneinheit (6;6A) und das Abstandselement (2,11) miteinander zu verbinden.

2. Verfahren gemäß Anspruch 1, dadurch gekennzeichnet, daß das druckübertragende Öffnungselement (16) einen Flansch (26) aufweist und derart angeordnet ist, daß das Mantelelement (10) den Flansch (26) berührt.

3. Verfahren gemäß Anspruch 1 oder 2, dadurch gekennzeichnet, daß die Membraneinheit (12;30), die Balkeneinheit (6,44), ein Abstandselement (2) und die wärmeempfindlichen Verbindungselemente (14,8,4) innerhalb des Mantelelements (10) derart angeordnet sind, daß sie, beginnend bei dem Öffnungselement (16), in dem Mantelelement (10) folgendermaßen aneinandergereiht sind: Membraneinheit (12), Balkeneinheit (6) und Abstandseinheit (2), wobei einzelne der wärmeempfindlichen Verbindungselemente (14,8,4) zwischen
(i) dem Öffnungselement (16) und der Membraneinheit (12,30),
(ii) der Membraneinheit (12,30) und der Balkeneinheit (6), und
(iii) der Balkeneinheit (6) und dem Abstandselement (2)
angeordnet sind und an diesen angreifen.

4. Verfahren nach Anspruch 3, dadurch gekennzeichnet, daß das kraftübertragende Element (34) mit der Membran (30) zusammengeformt ist.

5. Verfahren nach Anspruch 4, dadurch gekennzeichnet, daß eines (8) der Verbindungselemente, welches zwischen der Membraneinheit (12,30) und der Balkeneinheit (6) angeordnet ist, die Form eines Rings mit einem mitten hindurchlaufenden, schmalen Abschnitt (48) aufweist und derart orientiert ist, daß der schmale Abschnitt (48) in einem rechten Winkel zu dem Balken (44) der Balkeneinheit (6) verläuft, und wobei in Schritt (e) das Verbindungselement (8) die Verbindung des kraftübertragenden Elements (34) mit dem Balken (44) bewirkt.

6. Verfahren nach Anspruch 1 oder 2, dadurch gekennzeichnet, daß die Membraneinheit, die aus einem die Membran abstützenden Element (12A) und aus einer Membran gebildet ist, die Balkeneinheit (6A), die Abstandselemente (2,11) und die Verbindungselemente (14,15,8,9,4) in dem Mantelelement derart angeordnet sind, daß sie, beginnend bei dem Öffnungselement (16), in dem Mantelelement (10) folgendermaßen aneinandergereiht sind: Abstützungselement (12A) für die Membran, Membran (13), Abstandselement (11), Balkeneinheit (6A), Abstandselement (2), wobei das kraftübertragende Element (98) sich zwischen Balkeneinheit (6A) und Membran (13) erstreckt, und wobei einzelne der wärmeempfindlichen Verbindungselemente (14,15,8,9,4) zwischen
(i) dem Öffnungselement (16) und dem Abstützungselement (12A) für die Membran,
(ii) dem Abstützungselement (12A) für die Membran und der Membran (13),
(iii) der Membran (13) und dem Abstandselement (11),
(iv) dem Abstandselement (11) und der Balkeneinheit (6A), sowie
(v) der Balkeneinheit (6A) und dem Abstandselement (2)
angeordnet sind und an diesen angreifen.

7. Verfahren nach Anspruch 6, dadurch gekennzeichnet, daß die Balkeneinheit (6A)
(i) einen ringförmigen Balkenträger,
(ii) einen mitten hindurchlaufenden Balken (96), der an beiden Enden von dem Balkenträger abgestützt wird und mit diesem zusammengeformt ist, sowie
(iii) einen axial verlaufenden, kraftübertragenden Fortsatz (98), der mit dem Balken (98) zusammengeformt ist,
aufweist.

8. Verfahren nach Anspruch 7, dadurch gekennzeichnet, daß dasjenige (8) der Verbindungselemente, welches zwischen der Membran (13) und dem Abstandselement (11) angeordnet ist, die Form eines Rings mit einem mittig hindurchlaufenden, schmalen Abschnitt aufweist, und daß in Schritt (e) das Verbindungselement (8) die Verbindung des kraftübertragenden Fortsatzes (98) mit der Membran (13) bewirkt.

9. Verfahren nach einem der vorhergehenden Ansprüche, gekennzeichnet durch den weiteren Schritt, daß im Anschluß an Schritt (e) eine Dehnungsmeßeinheit (17) mit dem Balken (44) verbunden wird.

10. Verfahren nach Anspruch 9, dadurch gekennzeichnet, daß die Dehnungsmeßeinheit (17) mittels eines durch Wärme härtenden Klebstoffs befestigt wird.

11. Verfahren nach Anspruch 9 oder 10, dadurch gekennzeichnet, daß die Dehnungsmeßeinheit (17) aus einem einzelnen Span (19) von Silizium oder Germanium gebildet ist, und daß dieser Span (19) auf einer Seite des Mittelpunkts des Balkens (44) angeordnet ist.

12. Verfahren nach Anspruch 11, dadurch gekennzeichnet, daß der Span (19) mindestens drei Verbindungsanschlüsse (22A,22B,22C) aufweist, die an den gegenüberliegenden Enden sowie am Mittelpunkt des Spans (19) angeordnet sind.

13. Verfahren nach Anspruch 12, gekennzeichnet durch den Schritt der Befestigung einer Anschlußplatine (50) an dem Abstandselement (2), wobei die Anschlußplatine (50) drei leitende Anschlüsse (52) aufweist, und wobei anschließend drahtförmige Leiter (60) zwischen den leitenden Anschlüssen (52) der Anschlußplatine (50) und den Verbindungsanschlüssen (22A,22B,22C) der Dehnungsmeßeinheit (17) kontaktiert werden.

14. Verfahren nach einem der vorhergehenden Ansprüche, dadurch gekennzeichnet, daß in einem weiteren Schritt das Mantelelement (10) in ein hohles, äußeres Gehäuse (90) eingesetzt wird, und daß ein Ende des äußeren Gehäuses (90) an dem Öffnungselement (16) festgelegt wird.

15. Verfahren nach Anspruch 14, dadurch gekennzeichnet, daß in einem weiteren Schritt das andere Ende des Gehäuses (90) mit einem elektrischen Verbindungsstück (92) verschlossen wird, das mit leitenden Polen (94) versehen ist, die mit den leitenden Anschlüssen (54) der Anschlußplatine (50) gekoppelt werden.

## Revendications

1. Procédé de fabrication d'un capteur de pression comprenant les étapes consistant :
a) à se munir d'un boîtier (10), d'un élément à orifice de transmission de pression (16), d'un diaphragme flexible (30; 13), d'une unité à poutre (6; 6A) comprenant une poutre (44; 96) qui comporte des première et seconde extrémités opposées et une section périphérique (7) qui entoure ladite poutre (44), de moyens (28, 12A) destinés à supporter au moins ledit diaphragme (30; 13) ou ladite unité à poutre (6; 6A) d'une façon telle que ladite poutre (44) soit parallèle à et espacée dudit diaphragme (30; 13), d'un moyen de transmission d'effort (34; 98) s'étendant entre ladite poutre (44) et ledit diaphragme (30; 13) d'une façon telle que ladite poutre (44) puisse être fléchie lorsque ledit diaphragme (30; 13) est fléchi par une pression d'un fluide appliquée par l'intermédiaire dudit élément à orifice (16), d'au moins un élément d'écartement (2, 11), et d'une pluralité d'éléments de liaison préformés sensibles à la chaleur (14, 15, 8, 9, 4) destinés à fixer les éléments précédents ensemble;
b) à assembler ledit élément à orifice (16), ledit diaphragme (30; 13), ladite unité à poutre (6; 6A), ledit élément d'écartement (2, 11), ledit moyen de support (28; 12A), ledit moyen de transmission d'effort (34; 98) et ladite pluralité d'éléments de liaison préformés sensibles à la chaleur (14, 15, 8, 9, 4), d'une façon telle que ledit diaphragme (30; 13), ladite unité à poutre (6; 6A), ledit ou lesdits élément(s) d'écartement (2, 11), ledit moyen de support (28), ledit moyen de transmission d'effort (34; 98), et lesdits éléments de liaison sensibles à la chaleur (14, 15, 8, 9, 4) soient placés dans des positions adjacentes et en contact mutuel, ledit diaphragme (30; 13) étant disposé dans un plan qui s'étend à angle droit par rapport à l'axe longitudinal dudit élément à orifice (16); caractérisé
c) en ce que les diamètres extérieurs de l'unité à diaphragme (12; 12A, 13), de ladite unité à poutre (6; 6A), dudit ou desdits élément(s) d'écartement (2, 11), et desdits éléments de liaison préformés sensibles à la chaleur (14, 15, 8, 9, 4) sont dimensionnés pour que chacun de ces éléments s'assemblent de façon précise dans le logement (10);
d) en ce que lesdits éléments précédents sont disposés à l'intérieur dudit boîtier (10) dans des positions adjacentes et en contact mutuel ;
e) et en ce que l'ensemble résultant est chauffé de façon que lesdits éléments de liaison sensibles à la chaleur (14, 15, 8, 9, 4) lient ensemble ledit boîtier (10), ledit élément à orifice (16), ledit diaphragme (30; 13), ledit moyen de support (28; 12A), ledit moyen de transmission d'effort (34; 98), ladite unité à poutre (6; 6A), et ledit élément d'écartement (2, 11).

2. Procédé selon la revendication 1, caractérisé en ce que l'élément à orifice de transmission de pression (16) comprend une collerette (26), et est positionné de telle façon que le boîtier (10) vienne en prise avec ladite collerette (26).

3. Procédé selon la revendication 1 ou 2, caractérisé en ce que ladite unité à diaphragme (12; 30), ladite unité à poutre (6; 44), ledit élément d'écartement (2) et lesdits éléments de liaison sensibles à la chaleur (14, 8, 4) sont disposés à l'intérieur dudit boîtier (10) d'une façon telle que l'ordre de disposition dans le boîtier (10) en partant de l'élément à orifice (16), soit l'unité à diaphragme (12), l'unité à poutre (6) et l'élément d'écartement (2), certains desdits éléments de liaison sensibles à la chaleur (14, 8, 4) étant disposés entre et en prise avec :
(i) ledit élément à orifice (16) et ladite unité à diaphragme (12, 30),
(ii) ladite unité à diaphragme (12, 30) et ladite unité à poutre (6), et
(iii) ladite unité à poutre (6) et ledit élément d'écartement (2).

4. Procédé selon la revendication 3, caractérisé en ce que ledit moyen de transmission d'effort (34) est formé en une pièce avec ledit diaphragme (30).

5. Procédé selon la revendication 4, caractérisé en ce qu'un premier (8) desdits éléments de liaison, qui est disposé entre ladite unité à diaphragme (12, 30) et ladite unité à poutre (6), est sous la forme d'un anneau ayant une section étroite (48) s'étendant sur un diamètre et est orienté de façon que ladite section étroite (48) s'étende à angle droit par rapport à la poutre (44) de ladite unité à poutre (6) et en ce que, à l'étape (e), ledit premier moyen de liaison (8) provoque une liaison dudit moyen de transmission d'effort (34) à la poutre (44).

6. Procédé selon la revendication 1 ou 2, caractérisé en ce que ladite unité à diaphragme comprend un élément support de diaphragme (12A) et un diaphragme (13), ladite unité à poutre (6A), lesdits éléments d'écartement (2, 11) et les éléments de liaison (14, 15, 8, 9, 4) sont disposés à l'intérieur dudit boîtier (10), de telle façon que l'ordre de disposition dans le boîtier (10), à partir de l'élément à orifice (16) soit l'élément support de diaphragme (12A), le diaphragme (13), l'écarteur (11), l'unité à poutre (6A), et l'élément d'écartement (2), ledit moyen de transmission d'effort (98) s'étendant entre ladite unité à poutre (6A) et ledit diaphragme (13), et desdits éléments de liaison sensibles à la chaleur (14, 15, 8, 9, 4) étant séparément disposés entre et en prise avec :
(i) ledit élément à orifice (16) et ledit élément support de diaphragme (12A),
(ii) ledit élément support de diaphragme (12A) et ledit diaphragme (13),
(iii) ledit diaphragme (13) et ledit écarteur (11),
(iv) ledit écarteur (11) et ladite unité à poutre (6A), et
(v) ladite unité à poutre (6A) et ledit élément d'écartement (2).

7. Procédé selon la revendication 6, caractérisé en ce que ladite unité à poutre (6A) comprend :
(i) un support de poutre annulaire,
(ii) une poutre s'étendant diamétralement (96) supportée aux deux extrémités par ledit support de poutre et formée en une pièce avec celui-ci, et
(iii) une saillie de transmission d'effort s'étendant axialement (98) formée d'une seule pièce avec ladite poutre (98).

8. Procédé selon la revendication 7, caractérisé en ce qu'un premier (8) desdits éléments de liaison, qui est disposé entre ledit diaphragme (13) et ledit élément d'écartement (11) est sous la forme d'un anneau avec une section étroite s'étendant diamétralement, et en ce que, à l'étape (e), ledit premier élément de liaison (8) provoque la liaison de ladite saillie de transmission d'effort (98) audit diaphragme (13).

9. Procédé selon l'une quelconque des revendications précédentes, caractérisé par l'étape supplémentaire de liaison d'une unité à jauge de contrainte (17) à ladite poutre (44) après l'étape (e).

10. Procédé selon la revendication 9, caractérisé en ce que ladite unité à jauge de contrainte (17) est liée par une colle thermodurcissable.

11. Procédé selon la revendication 9 ou 10, caractérisé en ce que ladite unité à jauge de contrainte (17) est une simple pastille (19) de silicium ou de germanium, et en ce que la simple pastille (19) est disposée sur un côté du point milieu de ladite poutre (44).

12. Procédé selon la revendication 11, caractérisé en ce que ladite pastille (19) comprend au moins trois plots de soudure (22A, 22B, 22C) situés sur les extrémités opposées et aussi sur le point milieu de ladite pastille (19).

13. Procédé selon la revendication 12, caractérisé par l'étape consistant à fixer une plaque d'interconnexion (50) audit élément d'écartement (2), ladite plaque d'interconnexion (50) disposant de trois plots conducteurs (52), et à connecter ensuite des fils conducteurs (60) entre les plots conducteurs (52) sur ladite plaque d'interconnexion (50) et les plots de soudure (22A, 22B, 22C) sur ladite unité à jauge de contrainte (17).

14. Procédé selon l'une quelconque des revendications précédentes, caractérisé par l'étape supplémentaire consistant à insérer ledit boîtier (10) dans une enveloppe externe creuse (90) et à fixer une première extrémité de ladite enveloppe externe (90) audit élément à orifice (16).

15. Procédé selon la revendication 14, caractérisé par l'étape supplémentaire consistant à fermer la seconde extrémité de ladite enveloppe (90) avec un connecteur électrique (92) disposant de bornes conductrices (94) qui sont couplées aux plots conducteurs (54) sur ladite plaque d'interconnexion (50).
